# EUROPEAN PATENT APPLICATION

(11) **EP 4 661 268 A1**
(43) Date of publication of application: **10.12.2025**
(21) Application number: 25178826.1
(22) Date of filing: 26.05.2025
(51) Int. Cl.: H02M 1/10, H02M 3/335, H02M 1/00, H02M 1/36

(54) **POWER CONVERSION DEVICE**

(30) Priority: 04.06.2024 JP 2024090911
(71) Applicant: Hitachi, Ltd., Tokyo 100-8280 (JP)
(72) Inventor: NAKAHARA, Mizuki, Tokyo, 100-8280 (JP); MABUCHI, Yuuichi, Tokyo, 100-8280 (JP); SHIMADA, Takae, Tokyo, 100-8280 (JP); KAWAGUCHI, Yuki, Tokyo, 100-8280 (JP)
(74) Representative: MERH-IP Matias Erny Reichl Hoffmann Patentanwälte PartG mbB

(57) **Abstract**

A power conversion device includes a control circuit, wherein when switching outputs of a first DC-DC converter and a second DC-DC converter from a parallel connection to a series connection, the control circuit causes at least one of the first and second DC-DC converters to continue the operation, cuts off the output of the isolated DC-DC converter that has been stopped using the switches, thereafter causes the isolated DC-DC converter that has been stopped to regenerate the stored energy of an output direct current capacitor to the input side, and when the voltage between the terminals of the output direct current capacitor of the isolated DC-DC converter that has been stopped becomes equal to or less than a predetermined value, causes the output of the isolated DC-DC converter that has been stopped to be connected in series, and restarts the operation of the isolated DC-DC converter that has been stopped.

## Description

### BACKGROUND OF THE INVENTION

### 1. Field of the Invention

The present invention relates to a power conversion device.

### 2. Description of the Related Art

In recent years, power conversion devices that convert alternating current into direct current or direct current into alternating current are often used. This type of power conversion device is applied also to the field of high voltage.

In a power converter that charges and discharges a battery mounted on a backup power source, an electric vehicle (EV), or the like, it is necessary to perform an appropriate charging and discharging operation corresponding to a wide voltage range of the battery. In addition, in recent years, there is a trend of enabling high power output while suppressing an increase in current by increasing the number of battery cells connected in series or increasing the voltage of battery cells. Thus, the power converter to be connected to a battery needs to cope with a higher voltage than before.

However, a power device having a high withstand voltage is generally expensive, and there is a problem that the cost of the power converter increases when the withstand voltage is simply increased.

JP 2021-170903 A describes a power conversion device that corresponds to a high voltage using an inexpensive low withstand voltage power device by enabling connection of inputs or outputs of two power converters to be switched between series and parallel. In the power conversion device described in JP 2021-170903 A, three switches are provided on the output side of two isolated DC-DC converters, and the outputs of the two isolated DC-DC converters can be made in series or in parallel by switching these switches. For example, when it is necessary to increase the output voltage, the outputs may be connected in series, and the output voltage can be increased about twice. When the output voltage is low, but it is necessary to flow a large amount of output current, the outputs are connected in parallel. This can increase the output current about twice.

### SUMMARY OF THE INVENTION

The device described in JP 2021-170903 A can switch the connection of input or output by controlling on and off states of three switches.

However, for the case of switching the connection during the operation of the power converter, there is no detailed description regarding the switching procedure of the switches.

For example, when a battery is connected to the output of the DC-DC converters, and the output is switched from the parallel connection to the series connection, a voltage of about twice may be suddenly applied to the battery, and an inrush current may flow when the switch is simply switched. On the other hand, depending on the standard of the EV charger, there may be a function of issuing an error and stopping the system when the charging power becomes zero for a certain period of time. Thus, it is desirable that the parallel connection and the series connection can be switched while the power converter is operated.

The present invention has been made in view of such circumstances, and an object of the present invention is to provide a power conversion device that realizes appropriate connection switching of an input or an output of a power converter.

To solve the above-described problem, a power conversion device of the present invention is a power conversion device including a plurality of isolated DC-DC converters having inputs connected in parallel and outputs each including a direct current capacitor, a changeover switch that switches outputs of the plurality of isolated DC-DC converters between a parallel connection and a series connection or whether to disconnect the outputs, and a control unit that controls the isolated DC-DC converters and the changeover switch, wherein when the control unit switches the outputs of the plurality of isolated DC-DC converters from a parallel connection to a series connection, the control unit causes at least one isolated DC-DC converter of the plurality of isolated DC-DC converters to continue operation and another isolated DC-DC converter of the plurality of isolated DC-DC converters to stop, cuts off the output of the isolated DC-DC converter that has been stopped using the changeover switch, thereafter regenerates a stored energy of the direct current capacitor of the isolated DC-DC converter that has been stopped to the isolated DC-DC converter continuing operation, and when a voltage between terminals of the direct current capacitor of the isolated DC-DC converter that has been stopped has a value equal to or less than a predetermined value, causes the output of the isolated DC-DC converter that has been stopped to be connected in series using the changeover switch, and restarts operation of the isolated DC-DC converter that has been stopped.

According to the present invention, a power conversion device that realizes appropriate connection switching of an input or an output of a power converter can be provided.

### BRIEF DESCRIPTION OF THE DRAWINGS

Fig. 1 is a diagram illustrating a circuit configuration of a power conversion device according to a first embodiment of the present invention;
Fig. 2A is a conceptual diagram illustrating a relationship between the output connection state of a first DC-DC converter and a second DC-DC converter and an output voltage Vo when the power conversion device according to the first embodiment of the present invention has one threshold voltage;
Fig. 2B is a conceptual diagram illustrating a relationship between the output connection state of the first DC-DC converter and the second DC-DC converter and the output voltage Vo when the power conversion device according to the first embodiment of the present invention has two threshold voltages;
Fig. 3 is a graph illustrating <parallel to series connection> operation of the power conversion device according to the first embodiment of the present invention with time on the horizontal axis;
Fig. 4A is a diagram illustrating a current path of the power conversion device in each operation mode in a period from time t0 to time t1 in Fig. 3;
Fig. 4B is a diagram illustrating a current path of the power conversion device in each operation mode in a period from time t1 to time t2 in Fig. 3;
Fig. 4C is a diagram illustrating a current path of the power conversion device in each operation mode in a period from time t2 to time t3 in Fig. 3;
Fig. 4D is a diagram illustrating a current path of the power conversion device in each operation mode in a period from time t3 to time t4 in Fig. 3;
Fig. 4E is a diagram illustrating a current path of the power conversion device in each operation mode in a period from time t4 to time t5 in Fig. 3;
Fig. 4F is a diagram illustrating a current path of the power conversion device in each operation mode in a period from time t5 to time t6 in Fig. 3;
Fig. 4G is a diagram illustrating a current path of the power conversion device in each operation mode in a period from time t6 to time t7 in Fig. 3;
Fig. 4H is a diagram illustrating a current path of the power conversion device in each operation mode at and after time t7 in Fig. 3;
Fig. 5 is a flowchart illustrating <parallel to series connection> switching control of the power conversion device according to the first embodiment of the present invention;
Fig. 6 is a graph illustrating <series to parallel connection> operation of the power conversion device according to a second embodiment of the present invention with time on the horizontal axis;
Fig. 7A is a diagram illustrating a current path of the power conversion device in each operation mode in a period from time t0 to time t1 in Fig. 6;
Fig. 7B is a diagram illustrating a current path of the power conversion device in each operation mode in a period from time t1 to time t2 in Fig. 6;
Fig. 7C is a diagram illustrating a current path of the power conversion device in each operation mode in a period from time t2 to time t3 in Fig. 6;
Fig. 7D is a diagram illustrating a current path of the power conversion device in each operation mode in a period from time t3 to time t4 in Fig. 6;
Fig. 7E is a diagram illustrating a current path of the power conversion device in each operation mode at and after time t4 in Fig. 6;
Fig. 8 is a flowchart illustrating <series to parallel connection> switching control of the power conversion device according to the second embodiment of the present invention; and
Fig. 9 is a diagram illustrating a circuit configuration of a power conversion device according to a third embodiment of the present invention.

### DESCRIPTION OF THE PREFERRED EMBODIMENTS

Hereinafter, embodiments of the present invention will be described with reference to the drawings. The present invention is not limited to the following embodiments, and for example, a plurality of embodiments may be combined or any modification may be made without departing from the technical idea of the present invention.

In all the drawings for describing the embodiments described below, components having the same function are denoted by the same reference numerals, and repeated description thereof will be omitted.

The present invention does not affect a load such as a battery connected to the input or output of a power converter when the output is switched from the parallel connection to the series connection or from the series connection to the parallel connection, and achieves connection switching of the input or output in a state where the power converter is operated.

In a first embodiment, an example of switching the output from the parallel connection to the series connection will be described, and in a second embodiment, an example of switching the output from the series connection to the parallel connection will be described. A power conversion device according to the first embodiment and a power conversion device according to a second embodiment have the same configuration.

### (First embodiment)

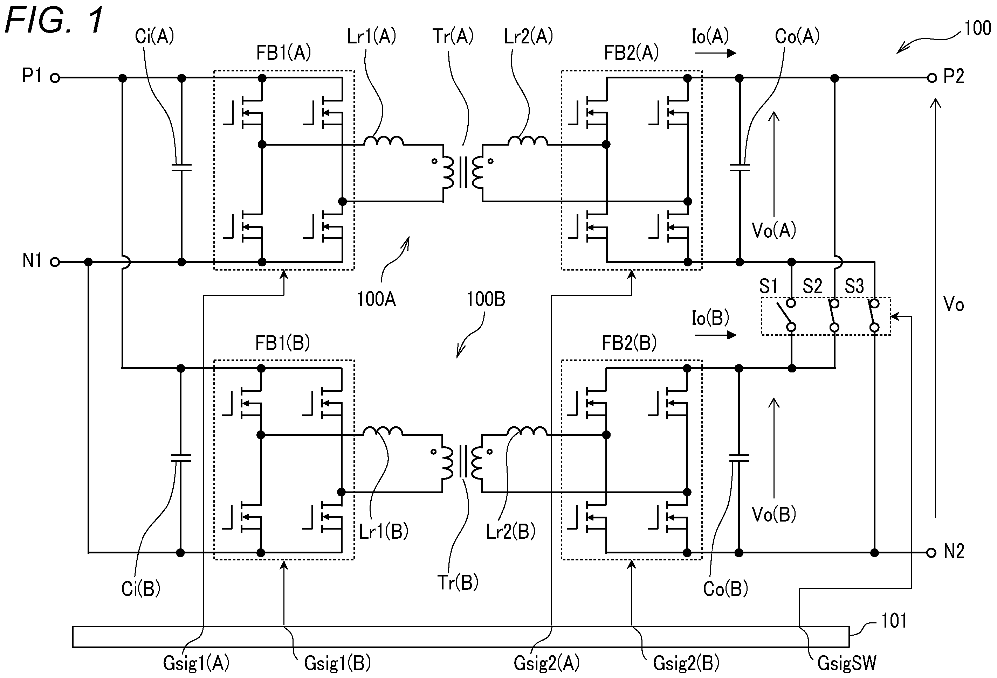

Fig. 1 is a diagram illustrating a circuit configuration of a power conversion device 100 according to a first embodiment of the present invention.

As illustrated in Fig. 1, the power conversion device 100 includes a first DC-DC converter 100A and a second DC-DC converter 100B (a plurality of isolated DC-DC converters) that receive direct current power from input terminals P1 and N1, switches (changeover switches) S1 to S3 that switch the output between parallel connection and series connection and whether to disconnect the output, on the output side of the first DC-DC converter 100A and the second DC-DC converter 100B, and a control circuit 101 (control unit) that controls the first DC-DC converter 100A, the second DC-DC converter 100B, and the switches S1 to S3.

The first DC-DC converter 100A and the second DC-DC converter 100B are a plurality of isolated DC-DC converters having inputs connected in parallel and outputs including a direct current capacitor.

The power output from the first DC-DC converter 100A and the second DC-DC converter 100B is sent from output terminals P2 and N2 to any external load.

The first DC-DC converter 100A and the second DC-DC converter 100B have a common circuit configuration, and include an input direct current capacitor Ci, an input-side full-bridge circuit FB1, a high-frequency transformer Tr, an output-side full-bridge FB2, and an output direct current capacitor Co. When the first DC-DC converter 100A and the second DC-DC converter 100B are distinguished from each other, the first DC-DC converter 100A is denoted with an input direct current capacitor Ci(A), an input-side full-bridge circuit FB1(A), a high-frequency transformer Tr(A), an output-side full-bridge FB2(A), and an output direct current capacitor Co(A), and the first DC-DC converter 100B is denoted with an input direct current capacitor Ci(B), an input-side full-bridge circuit FB1(B), a high-frequency transformer Tr(B), an output-side full-bridge FB2(B), and an output direct current capacitor Co(B) .

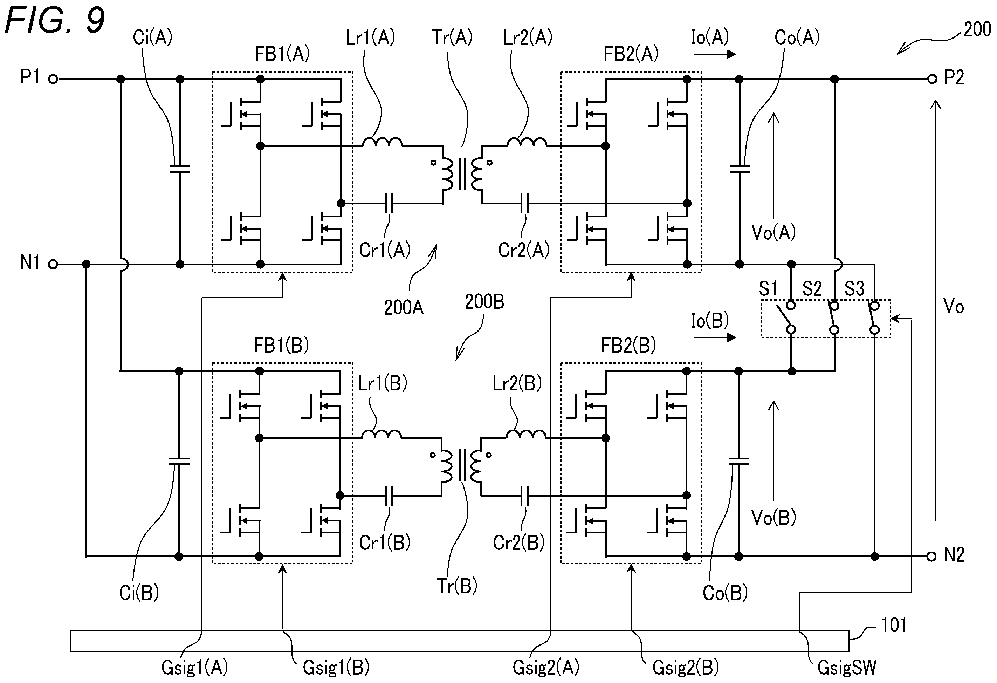

In Fig. 1, the first DC-DC converter 100A and the second DC-DC converter 100B are isolated DC-DC converters of a circuit system called dual active bridge (DAB). The first DC-DC converter 100A and the second DC-DC converter 100B may be LLC resonance type converters (Fig. 9 described later).

The first DC-DC converter 100A and the second DC-DC converter 100B adjust power by shifting switching phases of MOSFETs included in the input-side full-bridge circuit FB1 and the output-side full-bridge circuit FB2 between the input-side full-bridge circuit FB1 and the output-side full-bridge circuit FB2.

The high-frequency transformer Tr1 performs voltage conversion according to the turn ratio while insulating the high-frequency alternating current power output from the input-side full-bridge circuit FB1 and sends the power to the output-side full-bridge circuit FB2. The high-frequency transformer Tr1 has leakage inductances Lr1 and Lr2 in principle.

The output-side switches S1 to S3 can connect the outputs of the first DC-DC converter 100A and the second DC-DC converter 100B in parallel by turning off the switch S1 and turning on the switch S2 and the switch S3. The outputs of the first DC-DC converter 100A and the second DC-DC converter 100B can be connected in series by turning on the switch S1 and turning off the switch S2 and the switch S3. The input-side full bridge circuit FB1, the output-side full bridge FB2, and the switches S1 to S3 are driven by a control circuit 101.

The control circuit 101 outputs a control signal Gsig1(A) for controlling the input-side full bridge circuit FB1 of the first DC-DC converter 100A, a control signal Gsig2(A) for controlling the output-side full bridge circuit FB2, a control signal Gsig1(B) for controlling the input-side full bridge circuit FB1 of the second DC-DC converter 100B, a control signal Gsig2(B) for controlling the output-side full bridge FB2, and a switching control signal GsigSW for the switches S1 to S3.

In the case of <parallel to series connection> of switching the outputs from a parallel connection to a series connection, the control circuit 101 performs the control described below.

When switching the outputs of the first DC-DC converter 100A and the second DC-DC converter 100B (a plurality of isolated DC-DC converters) from a parallel connection to a series connection, the control circuit 101 causes at least one isolated DC-DC converter of the first DC-DC converter 100A and the second DC-DC converter 100B to continue the operation, causes the other insulated DC-DC converter to stop, cuts off the output of the isolated DC-DC converter that has been stopped using the switches (changeover switches) S1 to S3, thereafter causes the isolated DC-DC converter that has been stopped to regenerate the stored energy of the output direct current capacitor Co to the input side (the isolated DC-DC converter continuing operation), and when the voltage between the terminals of the output direct current capacitor Co of the isolated DC-DC converter that has been stopped becomes equal to or less than a predetermined value, causes the output of the isolated DC-DC converter that has been stopped to be connected in series using the switches (changeover switches) S1 to S3, and restarts the operation of the isolated DC-DC converter that has been stopped. The predetermined value is appropriately set according to a purpose or the like.

"Regenerating the stored energy of the output direct current capacitor Co to the isolated DC-DC converter continuing operation" as described above refers to charging the input direct current capacitor Ci of the insulating DC-DC converter continuing operation with the stored energy of the output direct current capacitor Co.

When the voltage between the terminals of the direct current capacitor of the isolated DC-DC converter that has been stopped does not decrease to a value equal to or less than a predetermined value, the control circuit 101 consumes the stored energy of the direct current capacitor as a switching loss of the power device included in the isolated DC-DC converter.

When restarting the operation of the isolated DC-DC converter that has been stopped, the control circuit 101 calculates output voltage command values of the isolated DC-DC converter continuing operation and the isolated DC-DC converter that has been stopped such that the total output voltage obtained by adding up the output voltages of the isolated DC-DC converter continuing operation and the isolated DC-DC converter that has been stopped becomes constant.

In Fig. 1, power metal oxide semiconductor field effect transistors (power MOSFET) are used as the power devices of the input-side full bridge circuit FB1 and the output-side full bridge FB2, but the present embodiment is not limited to this configuration, and other power devices such as insulated gate bipolar transistors (IGBT) may be used.

Hereinafter, an operation of the power conversion device 100 configured as described above will be described. In the first embodiment, the operation is a <parallel to series connection> operation of switching the output from a parallel connection to a series connection.

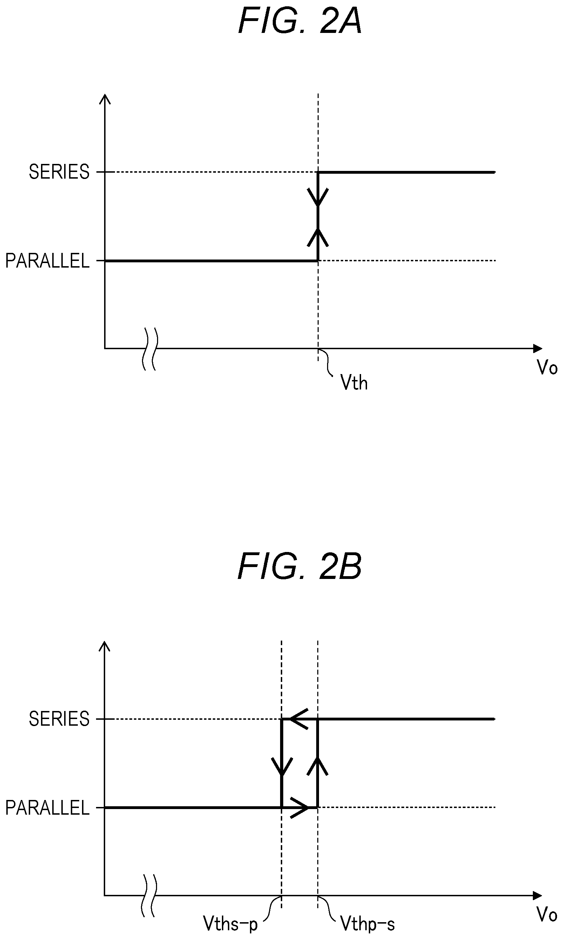

Figs. 2A and 2B are conceptual diagrams illustrating a relationship between the output connection state of the first DC-DC converter 100A and the second DC-DC converter 100B and an output voltage Vo.

Fig. 2A illustrates a case where there is one threshold voltage Vth <w/o hysteresis>, illustrating that parallel and series are switched at the threshold voltage Vth (see the arrows facing each other in Fig. 2A). When the output voltage Vo is equal to or lower than the threshold voltage Vth, the outputs are connected in parallel, and when the output voltage Vo exceeds the threshold voltage Vth, the outputs are connected in series.

### <Output connection state and output voltage Vo>

Fig. 2B illustrates a case where there are two threshold voltages Vth <w/ hysteresis>, and two threshold voltages of a first threshold voltage Vths-p and a second threshold voltage Vthp-s are provided. First, the output voltage Vo increases from the state of operating in parallel connection, and when the voltage exceeds the second threshold voltage Vth-s, a series connection is established. When the output voltage Vo decreases from the state of operating in series connection and falls below the first threshold voltage Vths-p, a parallel connection is established (see the circling arrows in Fig. 2B). Here, chattering can be prevented by setting the first threshold voltage Vths-p to be lower than the second threshold voltage Vths-s, that is, by providing hysteresis.

### <Transition of parallel to series connection>

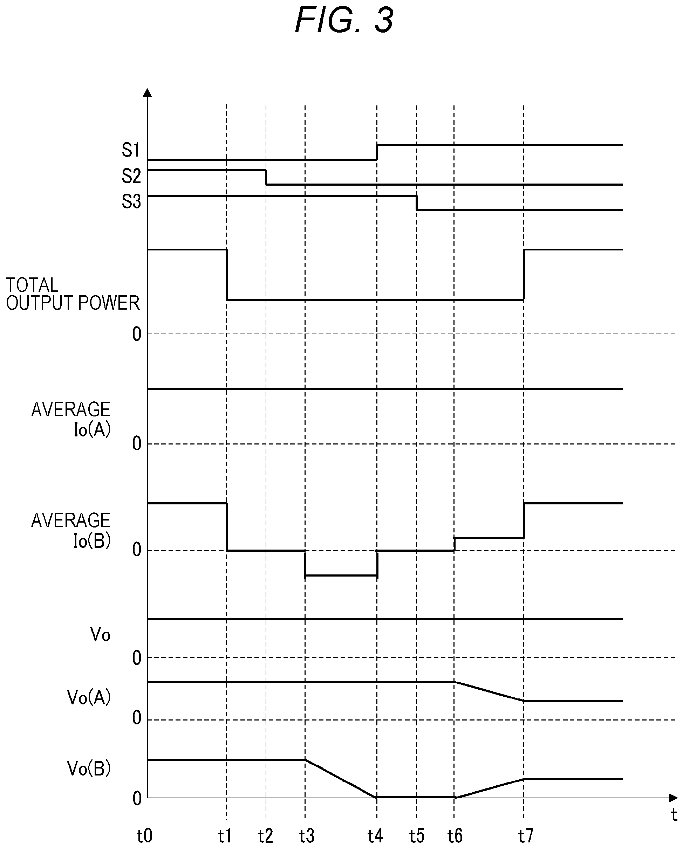

Fig. 3 is a graph illustrating <parallel to series connection> operation of the power conversion device 100 according to the first embodiment with time on the horizontal axis. Fig. 3 illustrates a transition of <parallel to series connection> of the power conversion device 100.

The states of the switches S1 to S3, the total output power of the first DC-DC converter 100A and the second DC-DC converter 100B, the average output current Io(A) of the first DC-DC converter 100A, the average output current Io(B) of the second DC-DC converter 100B, the total output voltage Vo, the output voltage Vo(A) of the first DC-DC converter 100A, and the output voltage Vo (B) of the second DC-DC converter 100B are illustrated in order from the top in Fig. 3.

Hereinafter, the circuit operation at each time and period will be described.

Initial state: It is assumed that the converter output is in parallel connection.

### · Period up to time t1

In a period up to time t1, the switch S1 is in an off state, the switches S2 and S3 are in an on state, and outputs of the first DC-DC converter 100A and the second DC-DC converter 100B are connected in parallel. Immediately before time t1, the control circuit 101 determines to switch the connection state of the outputs from parallel to series, and stops only the output of the second DC-DC converter 100B at time t1 and continues the operation of the first DC-DC converter 100A. At time t1, the parallel to series switching command is received from the control circuit 101, the output of the second DC-DC converter 100B is stopped, and the operation of the first DC-DC converter 100A is continued. Thus, the average output current Io(B) of the second DC-DC converter 100B becomes zero.

### · Time t2

Accordingly, the total output power of the first DC-DC converter 100A and the second DC-DC converter 100B is reduced by half. When the control circuit 101 stops the second DC-DC converter 100B, only the switch S2 is turned off at time t2. At time t2, the control circuit 101 turns off the switch S2 after stopping the output of the second DC-DC converter 100B. As a result, the output terminal of the second DC-DC converter 100B is disconnected from the output terminal P2.

### · Time t3

When the switch S2 is turned off, the control circuit 101 starts the operation of the second DC-DC converter 100B so as to discharge the output voltage V(B) of the second DC-DC converter 100B at time t3. At this time, the second DC-DC converter 100B is controlled to send power from the output into the input direction. The power sent to the input side is supplied from the second DC-DC converter 100B in operation to the load. That is, the energy stored in the output direct current capacitor Co(B) of the second DC-DC converter 100B is not converted into heat with a discharge resistor or the like, but is supplied to the load.

In this manner, at time t3, the control circuit 101 controls the second DC-DC converter 100B (for example, Io(B) is controlled to be negative) to send power to the input, and starts discharging the output direct current capacitor Co(B) .

### · Time t4

When the output voltage Vo(B) of the second DC-DC converter 100B becomes approximately zero (discharge completion) at time t4, the control circuit 101 turns on the switch S1. Here, depending on the circuit system of the isolated DC-DC converter, there may be a case where power cannot be sent to the input side before the output voltage Vo(B) reaches zero. In this case, for example, when the voltage becomes equal to or lower than a predetermined voltage, the stored energy of the output direct current capacitor Co(B) can be consumed as a switching loss by switching the upper arm or the lower arm of each leg of the full-bridge circuit in the same phase.

### · Time t5

Next, the control circuit 101 turns off the switch S3 at time t5. Through the operation up to this point, only the switch S1 is in an on state, and the outputs of the first DC-DC converter 100A and the second DC-DC converter 100B are connected in series.

### · Time t6

At time t6, the control circuit 101 starts control so that the output voltage Vo(A) of the first DC-DC converter 100A and the output voltage Vo(B) of the second DC-DC converter 100B are balanced while maintaining the total output voltage Vo constant. That is, control is performed such that the output voltage Vo(A) is lowered and the output voltage Vo(B) is raised. At time t6, the control circuit 101 starts charging the output voltage Vo(B) of the second DC-DC converter 100B, and performs voltage control to lower the output voltage Vo(A) of the first DC-DC converter 100A so that the total voltage Vo of the output voltage Vo(A) of the first DC-DC converter 100A and the output voltage Vo(B) of the second DC-DC converter 100B becomes constant.

### · Time t7

When the output voltage Vo(A) and the output voltage Vo(B) are balanced at time t7, the control circuit 101 starts outputting to the load of the second DC-DC converter 100B, the total output power of the first DC-DC converter 100A and the second DC-DC converter 100B becomes equivalent to that before the connection switching of the outputs, and the state shifts to a steady state. At time t7, when the output voltage Vo (A) of the first DC-DC converter 100A and the output voltage Vo (B) of the second DC-DC converter 100B reach the target voltage (Vo(A) = Vo(B)), the control circuit 101 shifts to the steady state.

Through the above operation, the power conversion device 100 according to the first embodiment can switch the outputs of the first DC-DC converter 100A and the second DC-DC converter 100B from a parallel connection to a series connection without stopping the output to the load. In addition, since the energy stored in the output direct current capacitor Co(B) before the switching is supplied to the load via the first DC-DC converter 100A in operation to be discharged, the switching operation can be performed with high efficiency.

In Fig. 3, the first DC-DC converter 100A is controlled to continue its operation, but the first DC-DC converter 100A and the second DC-DC converter 100B have the same configuration. Thus, the second DC-DC converter 100B may be controlled to continue its operation. Although the connection state of the outputs is switched in Fig. 3, the connection state of the inputs may be switched.

### <Current path in each operation mode>

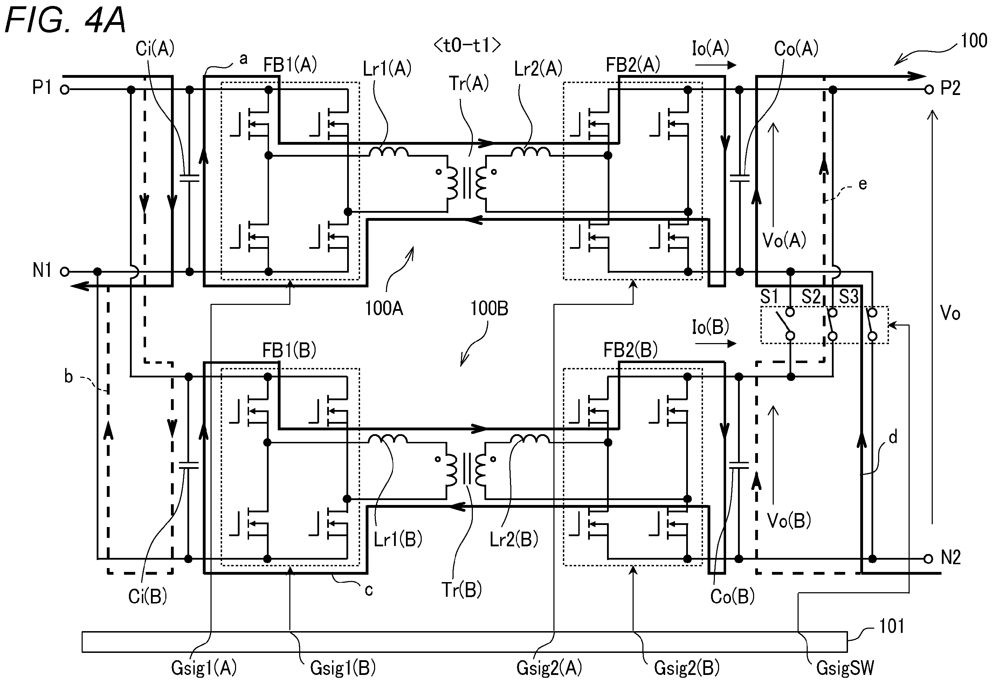

Figs. 4A to 4H are diagrams illustrating a current path of the power conversion device 100 in each operation mode in Fig. **3****.** The same components as those in Fig. 1 are denoted by the same reference numerals. The current path in each operation mode is indicated on the circuit diagram with a thick solid arrow and a thick broken arrow.

Here, a current path in a state where the switches of the left leg upper arm of the input-side full-bridge circuit FB1 and the output-side full-bridge circuit FB2 are conducting is illustrated.

### · Current path illustrated in Fig. 4A

Fig. 4A is a current path in a period from time t0 to time t1 in Fig. 3. In this period, the switch S1 is in an off state, the switches S2 and S3 are in an on state, and outputs of the first DC-DC converter 100A and the second DC-DC converter 100B are connected in parallel. Currents (thick solid arrows a, c, and d and thick broken arrows b and e in Fig. 4A) flow from the input terminal P1 to the first DC-DC converter 100A and the second DC-DC converter 100B, and the output direct current capacitor Co power is supplied via the high-frequency transformer Tr. The total current from the first DC-DC converter 100A and the second DC-DC converter 100B flows through the output terminal P2.

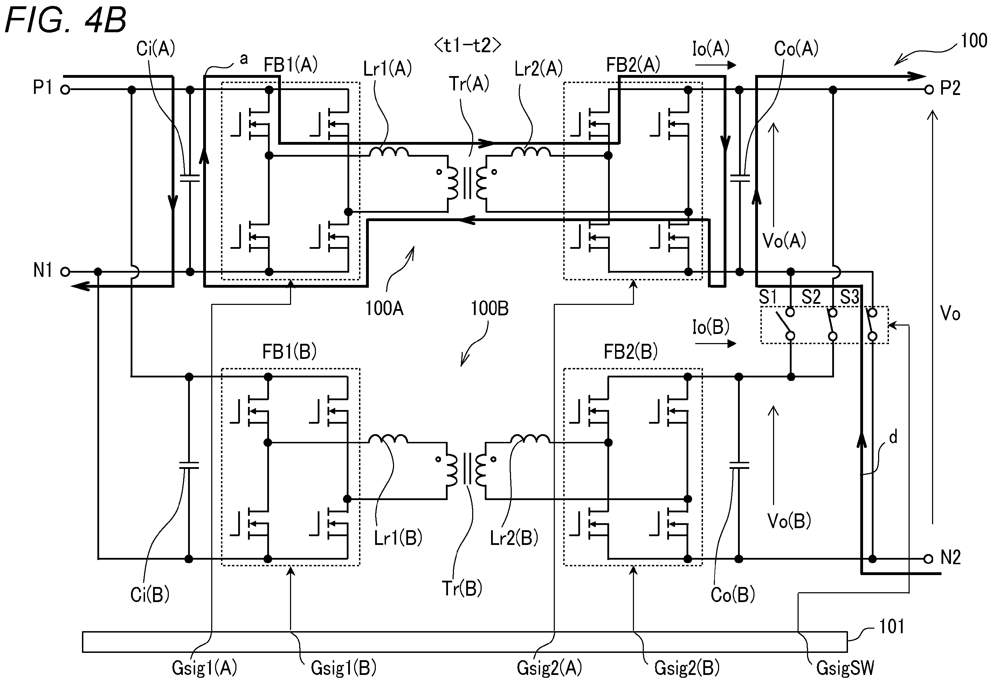

### · Current path illustrated in Fig. 4B

Fig. 4B is a current path in a period from time t1 to time t2 in Fig. 3. In this period, the switching of the input-side full-bridge circuit FB1 and the output-side full-bridge circuit FB2 of the second DC-DC converter 100B is stopped. Thus, the current supply from the second DC-DC converter 100B stops (only thick solid arrows a and d in Fig. 4B).

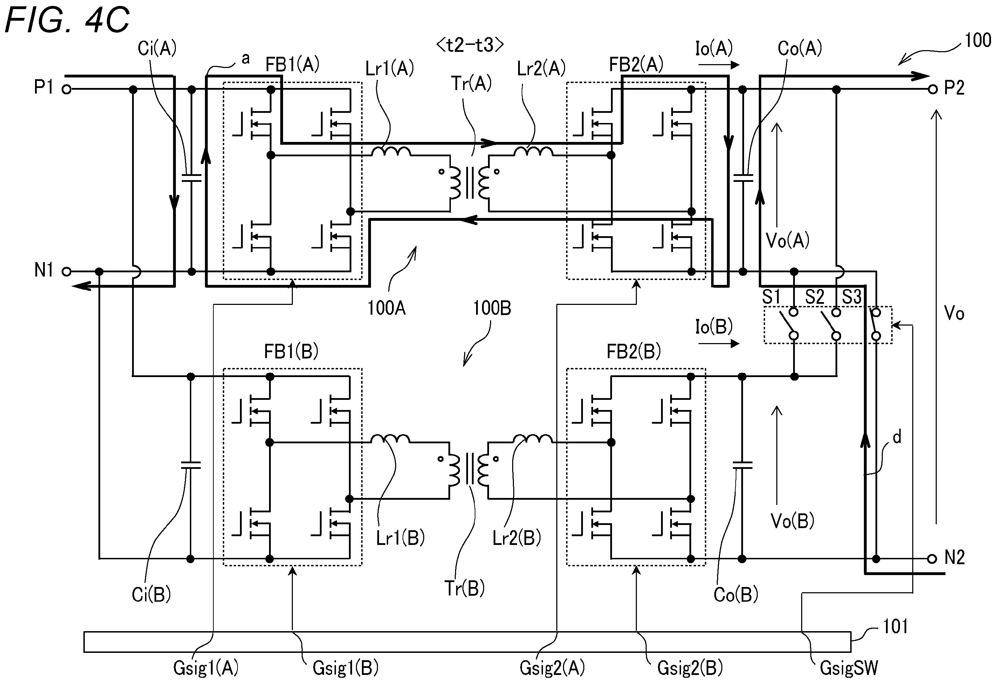

### · Current path illustrated in Fig. 4C

Fig. 4C is a current path in a period from time t2 to time t3 in Fig. 3. Although the switch S2 is turned off at time t2, the current has already stopped flowing through the switch S2 in Fig. 4B, and thus the current path (thick solid arrows a and d in Fig. 4C) is the same as in Fig. 4B.

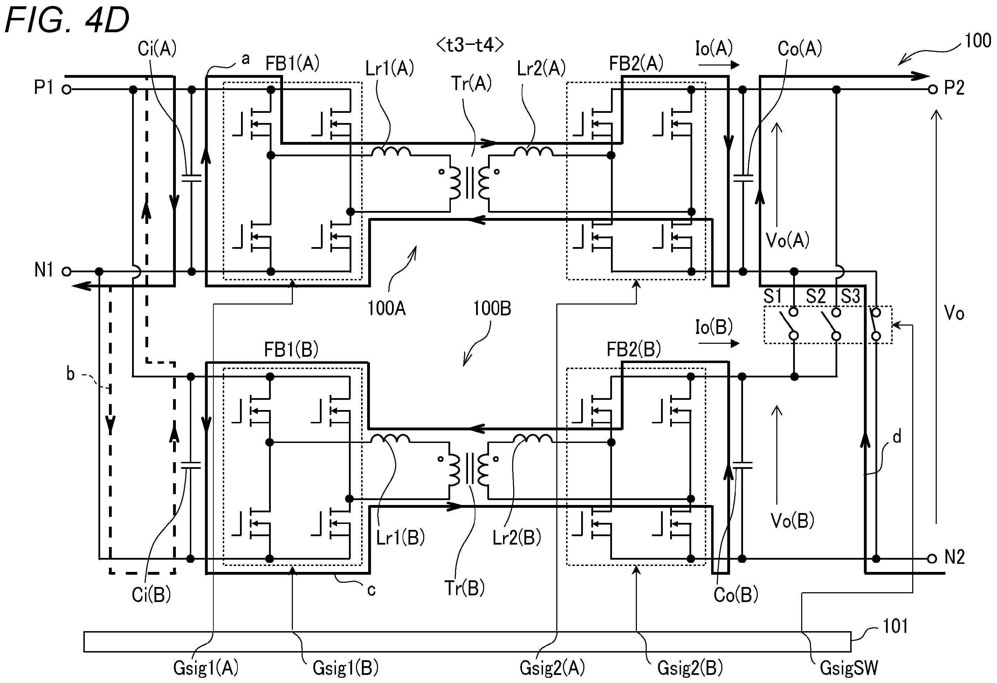

### · Current path illustrated in Fig. 4D

Fig. 4D is a current path in a period from time t3 to time t4 in Fig. 3. From time t3, the second DC-DC converter 100B is controlled into a direction in which the output direct current capacitor Co(B) discharges (thick solid arrow c in Fig. 4D), and thus, a current flows from the output side to the input side (thick solid arrow c in Fig. 4D). The current flowing into the input side flows to the input side of the first DC-DC converter 100A (thick broken line arrow b in Fig. 4D), and is supplied to the output side of the first DC-DC converter 100A (thick solid line arrow a in Fig. 4D). Thus, the energy stored in the output direct current capacitor Co(B) can be supplied to the output side via the first DC-DC converter 100A.

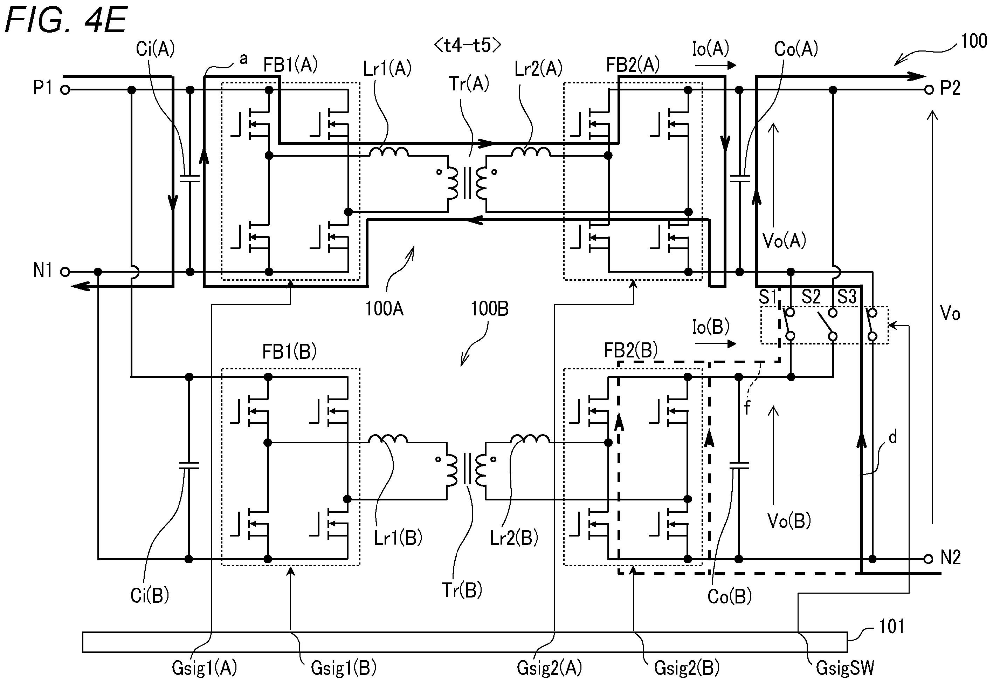

### · Current path illustrated in Fig. 4E

Fig. 4E is a current path in a period from time t4 to time t5 in Fig. 3. At time t4, the discharge of the output direct current capacitor Co(B) is completed, and further, the switch S1 is turned on. At this time, the switches S1 and S3 form a parallel circuit, and the current from the output terminal N2 is divided into a current (thick solid arrow d in Fig. 4E) and a current (thick broken arrow f in Fig. 4E). That is, since the voltage of the output direct current capacitor Co(B) is substantially zero, the parasitic diode of the MOSFET constituting the output-side full-bridge circuit FB2 is conducted, and the current flows to the switch S1 (thick broken line arrow f in Fig. 4E). On the other hand, the switch S3 also becomes conductive, and a current flows (thick solid arrow d in Fig. 4E). The ratio between the two currents (the ratio between the current flowing to the switch S1 and the current flowing to the switch S3) is determined by the forward voltage of the parasitic diode of the MOSFET or the like.

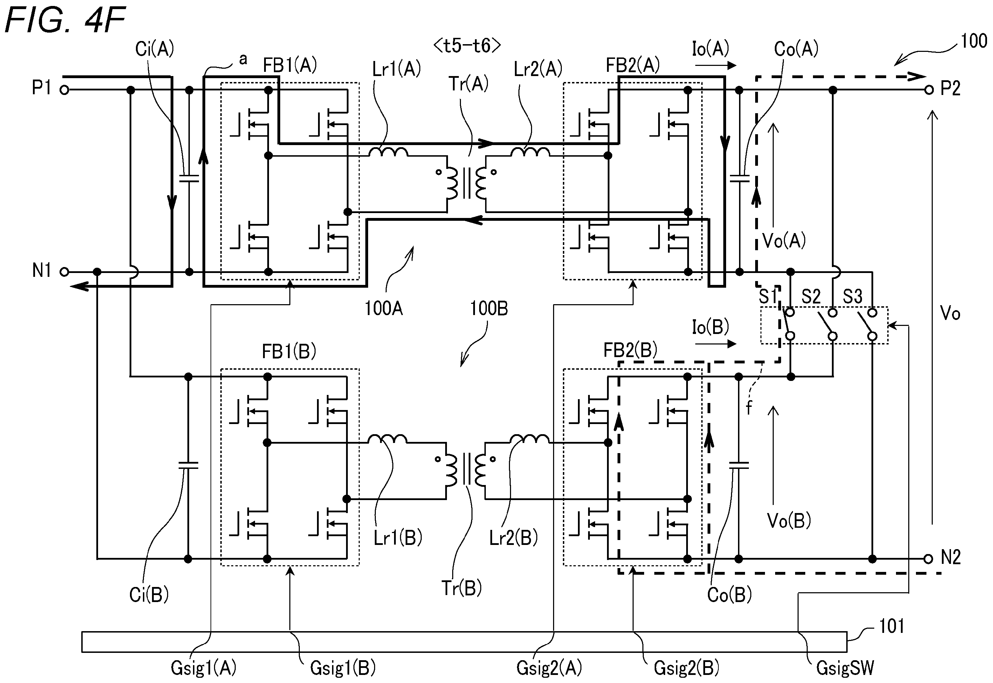

### · Current path illustrated in Fig. 4F

Fig. 4F is a current path in a period from time t5 to time t6 in Fig. 3. When the switch S3 is turned off at time t5, the outputs of the first DC-DC converter 100A and the second DC-DC converter 100B are connected in series. All the currents divided in Fig. 4E flow to the switch S1 (thick solid arrow f in Fig. 4F).

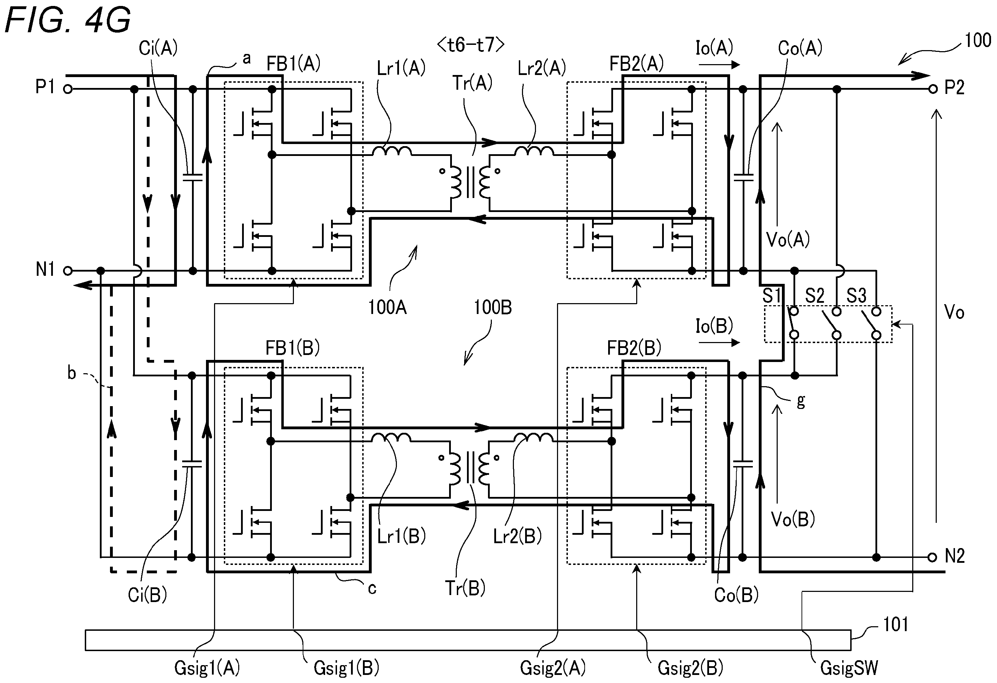

### · Current path illustrated in Fig. 4G

Fig. 4G is a current path in a period from time t6 to time t7 in Fig. 3. At time t6, the second DC-DC converter 100B starts switching and starts charging the output direct current capacitor Co(B) (thick solid arrow g in Fig. 4G). As the voltage of the output direct current capacitor Co(B) increases, the parasitic diode of the MOSFET turns off.

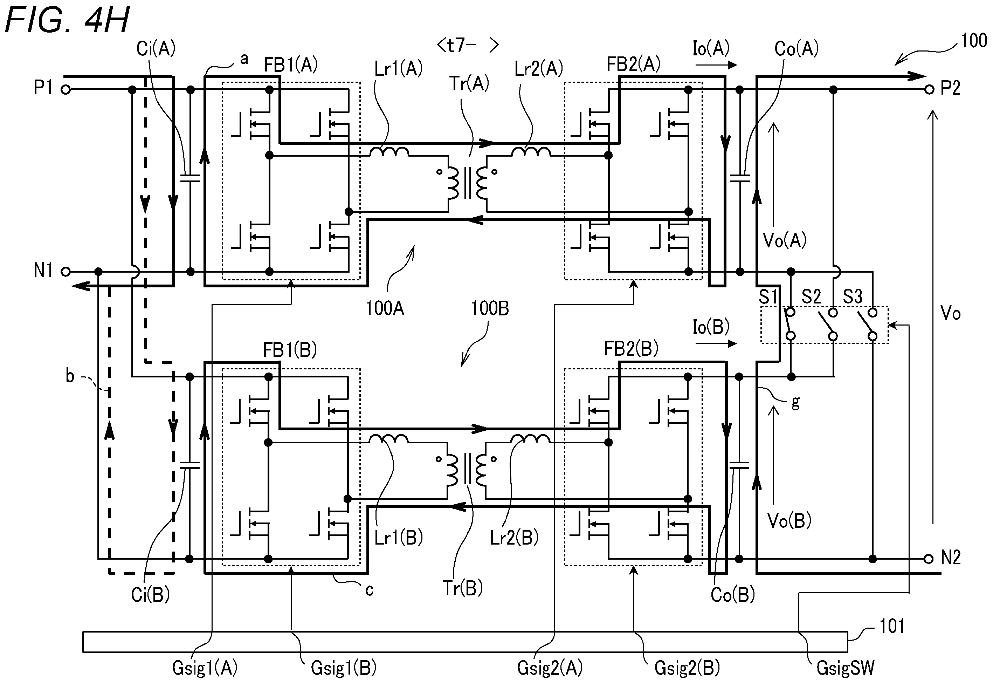

### · Current path illustrated in Fig. 4H

Fig. 4H is a current path at and after time t7 in Fig. 3. At time t7, the outputs of the first DC-DC converter 100A and the second DC-DC converter 100B are connected in series (thick solid arrows a, c, and g and thick broken arrow b in Fig. 4H), and shift to a steady state is made. A common current flows through the outputs of the first DC-DC converter 100A and the second DC-DC converter 100B (thick solid arrow g in Fig. 4H), and is supplied to the output terminal P2.

In Fig. 4H, an aspect in which the current flows through the parasitic diode of the MOSFET is illustrated, but the present invention is not limited to this configuration. For example, the MOSFET may be turned on.

### <Flowchart>

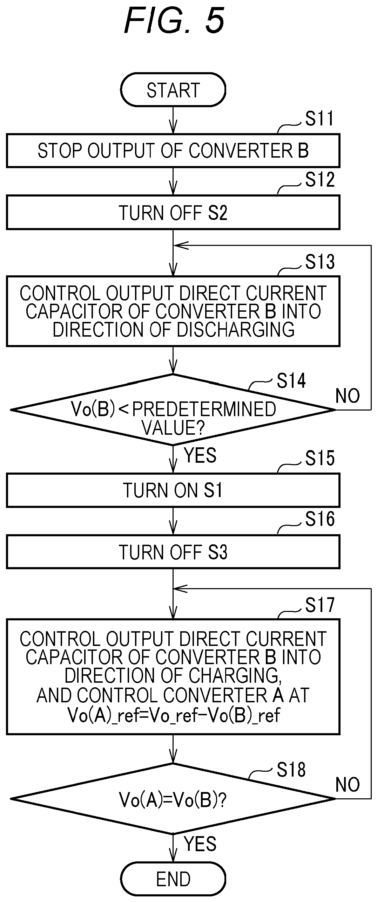

Fig. 5 is a flowchart illustrating <parallel to series connection> switching control of the power conversion device 100 according to the first embodiment. This flow is repeatedly executed by the control circuit 101 (Fig. 1) at a predetermined timing.

When the control circuit 101 starts the switching control, and the calculation flow starts, in step S11, the control circuit 101 stops the output of the second DC-DC converter 100B (denoted as converter B in Fig. 5 because of the denotation space).

In step S12, the control circuit 101 turns off the switch S2.

In step S13, the control circuit 101 controls the second DC-DC converter 100B such that power is sent into a direction of discharging the output direct current capacitor Co(B) of the second DC-DC converter 100B.

In step S14, the control circuit 101 determines whether the output voltage Vo(B) of the second DC-DC converter 100B is less than a predetermined value.

When the output voltage Vo(B) of the second DC-DC converter 100B is equal to or larger than the predetermined value (S14: No), the processing returns to step S13, and the discharge operation for the output direct current capacitor Co (B) is continued.

When the output voltage Vo(B) of the second DC-DC converter 100B is less than the predetermined value (S14: Yes), the control circuit 101 turns on the switch S1 in step S15.

Next, in step S16, the control circuit 101 turns off the switch S3.

In step S17, the control circuit 101 performs control into a direction of charging the output direct current capacitor Co(B) of the second DC-DC converter 100B, and at the same time, operates and controls the voltage command value Vo(A)ref of the first DC-DC converter 100A (denoted as converter A in Fig. 5 because of the denotation space) so that the total output power Vo does not change.

In step S18, the control circuit 101 determines whether the output voltage Vo(A) of the first DC-DC converter 100A and the output voltage Vo(B) of the second DC-DC converter 100B are equal to each other.

When the output voltage Vo(A) of the first DC-DC converter 100A and the output voltage Vo(B) of the second DC-DC converter 100B are not equal to each other (S18: No), the processing returns to step S17, and the control of step S17 is continued.

When the output voltage Vo(A) of the first DC-DC converter 100A and the output voltage Vo(B) of the second DC-DC converter 100B are equal to each other (S18: Yes), the switching of the outputs to the series connection is completed, the state shifts to the steady state, and the switching control is terminated.

By performing the switching control illustrated in the above flowchart, the outputs of the first DC-DC converter 100A and the second DC-DC converter 100B can be switched from parallel to series without generating an inrush current or the like in the load connected to the output terminals P2 and N2.

### (Second embodiment)

A second embodiment of the present invention is an example of a case where the outputs are switched from the series connection to the parallel connection in the power conversion device 100 of Fig. 1.

In the second embodiment, control to switch the outputs of the first DC-DC converter 100A and the second DC-DC converter 100B from series to parallel is performed in the configuration of the power conversion device 100 of Fig. 1. Hereinafter, differences from the first embodiment will be described, and description of the same points as those of the first embodiment will be omitted.

The control circuit 101 (Fig. 1) performs the control described below in the case of <series to parallel connection> of switching the outputs from a series connection to a parallel connection.

When switching the outputs of the first DC-DC converter 100A and the second DC-DC converter 100B (a plurality of isolated DC-DC converters) from a series connection to a parallel connection, the control circuit 101 continues the operation of at least one isolated DC-DC converter of the first DC-DC converter 100A and the second DC-DC converter 100B, and when the output voltage of the other isolated DC-DC converter becomes equal to or less than a predetermined value, the control circuit switches the outputs of the isolated DC-DC converter continuing the operation and the isolated DC-DC converter that has been stopped using the switches S1 to S3 so as to establish a series connection.

Hereinafter, the operation of the power conversion device 100 for switching the outputs from a series connection to a parallel connection will be described.

### <Transition of series to parallel connection>

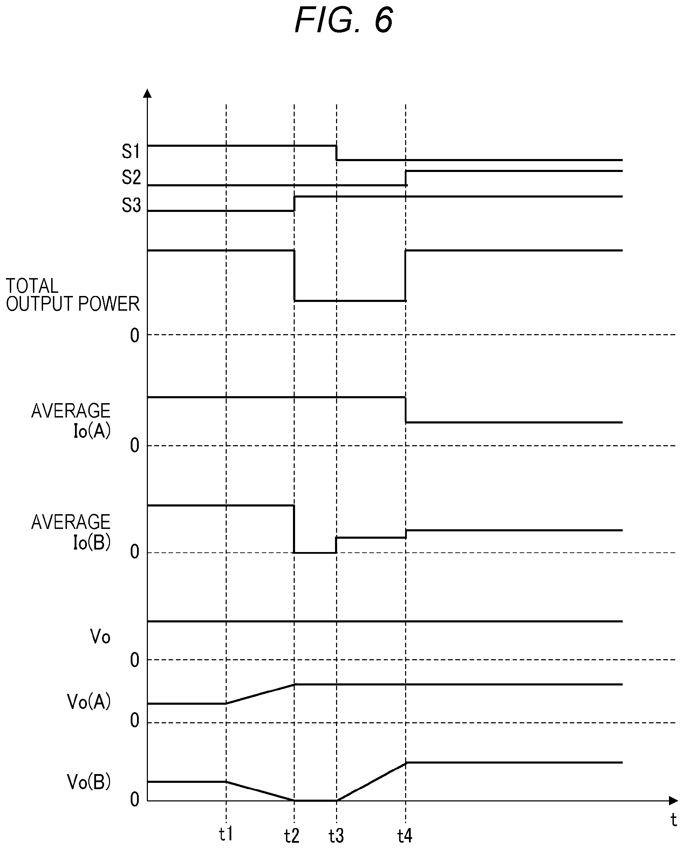

Fig. 6 is a graph illustrating <series to parallel connection> operation of the power conversion device 100 according to the second embodiment with time on the horizontal axis.

The states of the switches S1 to S3, the total output power of the first DC-DC converter 100A and the second DC-DC converter 100B, the average output current Io(A) of the first DC-DC converter 100A, the average output current Io(B) of the second DC-DC converter 100B, the total output voltage Vo, the output voltage Vo(A) of the first DC-DC converter 100A, and the output voltage Vo(B) of the second DC-DC converter 100B are illustrated in order from the top in Fig. 6.

Hereinafter, the circuit operation at each time and period will be described.

### · Period up to time t1

In a period until time t1, the switch S1 is in an on state, the switches S2 and S3 are in an off state, and the outputs of the first DC-DC converter 100A and the second DC-DC converter 100B are connected in series. The control circuit starts output switching control, and starts discharge operation of the output direct current capacitor Co(B) of the second DC-DC converter 100B from time t1. At this time, control is performed such that the output voltage command value Vo(B)ref of the second DC-DC converter 100B is lowered and the output voltage command value Vo(A)ref of the first DC-DC converter 100A is raised so that the total output voltage Vo does not change. The energy stored in the output direct current capacitor Co(B) is supplied to the load in this operation.

### · Time t2

When the output voltage Vo(B) becomes zero at time t2 and the discharge is completed, the second DC-DC converter 100B is stopped, and the switch S3 is turned on.

### · Time t3

At time t3, the switch S1 is turned off, and the second DC-DC converter 100B is controlled into the direction of charging the output direct current capacitor Co(B). Between time t3 and time t4, the output of the second DC-DC converter 100B is separated from the load, and the output direct current capacitor Co(B) is charged with the power sent from the input side.

### · Time t4

When the output voltage Vo(B) and the output voltage Vo(A) of the first DC-DC converter 100A become equal to each other at time t4, the switch S2 is turned on, and the switching to the parallel connection is completed.

Through the above operation, the power conversion device 100 according to the second embodiment can switch connections without stopping the operation of the first DC-DC converter 100A from series to parallel. In the discharge operation of the output direct current capacitor Co(B), the stored energy is supplied to the load and discharged. Thus, switching can be performed with high efficiency.

In Fig. 6, the first DC-DC converter 100A is controlled to continue its operation, but the present invention is not limited to this configuration. For example, the second DC-DC converter 100B may be controlled to continue its operation. Although the connection state of the outputs is switched in Fig. 6, the connection state of the inputs may be switched.

### <Current path in each operation mode>

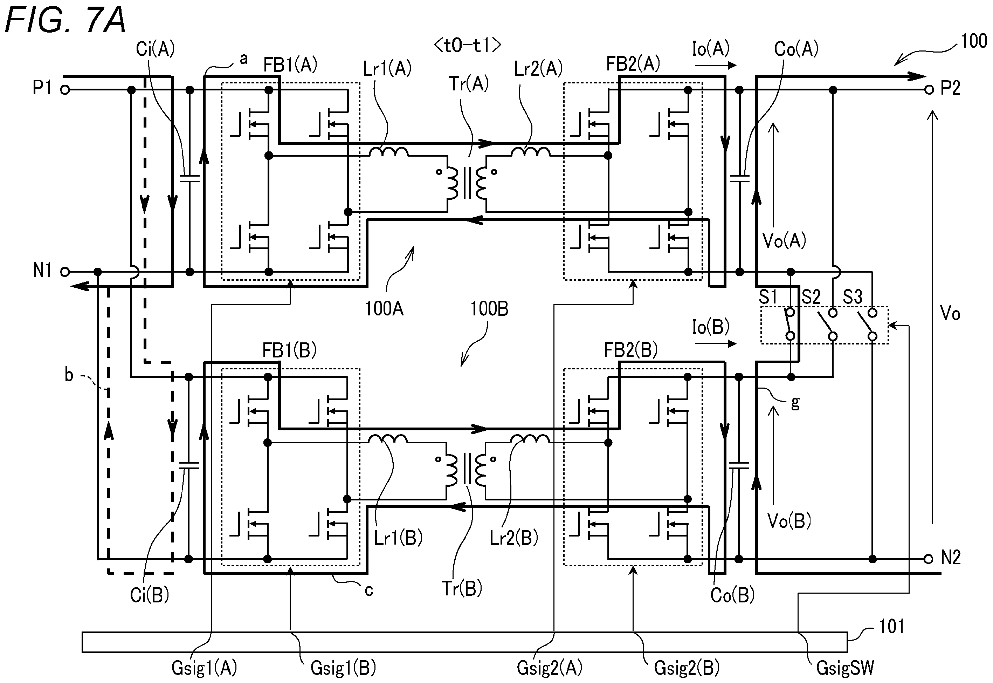

Figs. 7A to 7E are diagrams illustrating a current path of the power conversion device 100 in each operation mode in Fig. 6. The same components as those in Fig. 1 are denoted by the same reference numerals. The current path in each operation mode is indicated on the circuit diagram with a thick solid arrow and a thick broken arrow.

Here, a current path in a state where the switches of the left leg upper arm of the input-side full-bridge circuit FB1 and the output-side full-bridge circuit FB2 are conducting is illustrated.

### · Current path illustrated in Fig. 7A

Fig. 7A is a current path in a period from time t0 to time t1 in Fig. 6. In this period from time t0 to time t1, the switch S1 is in an on state, the switches S2 and S3 are in an off state, and outputs of the first DC-DC converter 100A and the second DC-DC converter 100B are connected in series (thick solid arrows a, c, and g and thick broken arrow b in Fig. 7A). Currents (thick solid arrows a and c in Fig. 7A) flow from the input terminal P1 to the first DC-DC converter 100A and the second DC-DC converter 100B, and the output direct current capacitor Co power is supplied via the high-frequency transformer Tr. To the output terminal P2, a current common in the first DC-DC converter 100A and the second DC-DC converter 100B flows (thick solid arrow g in Fig. 7A).

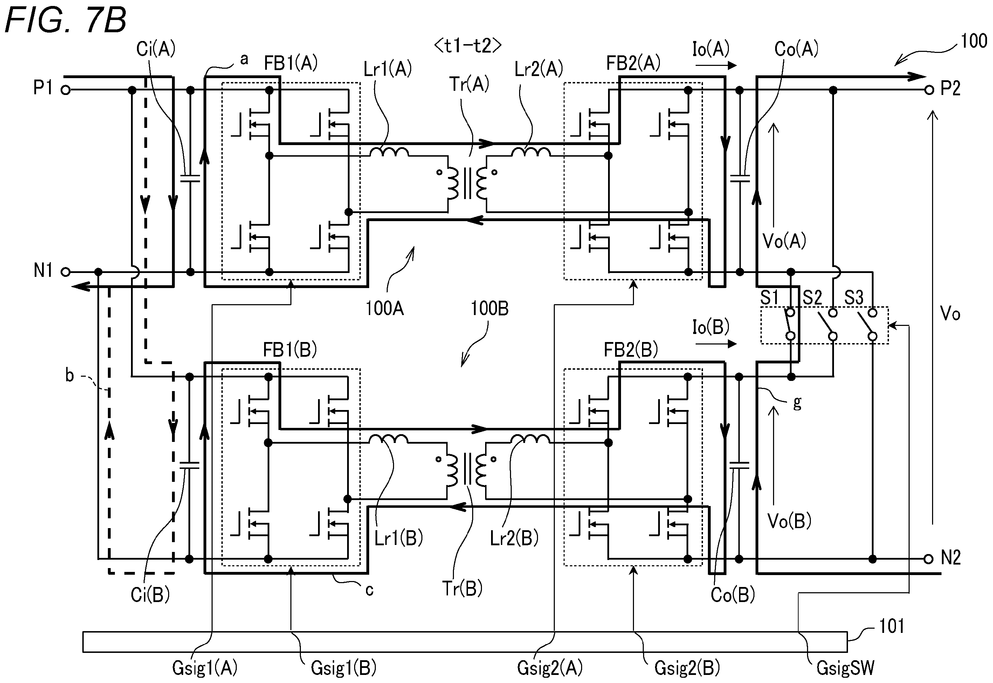

### · Current path illustrated in Fig. 7B

Fig. 7B is a current path in a period from time t1 to time t2 in Fig. 6. In a period from time t1 to time t2, the second DC-DC converter 100B is controlled into a direction of lowering Vo(B) while keeping the total of the output voltages Vo(A) and Vo(B) constant. The current path is the same as in Fig. 7A (thick solid arrows a, c, and g and thick broken arrow b in Fig. 7B), and there is no difference in the drawing.

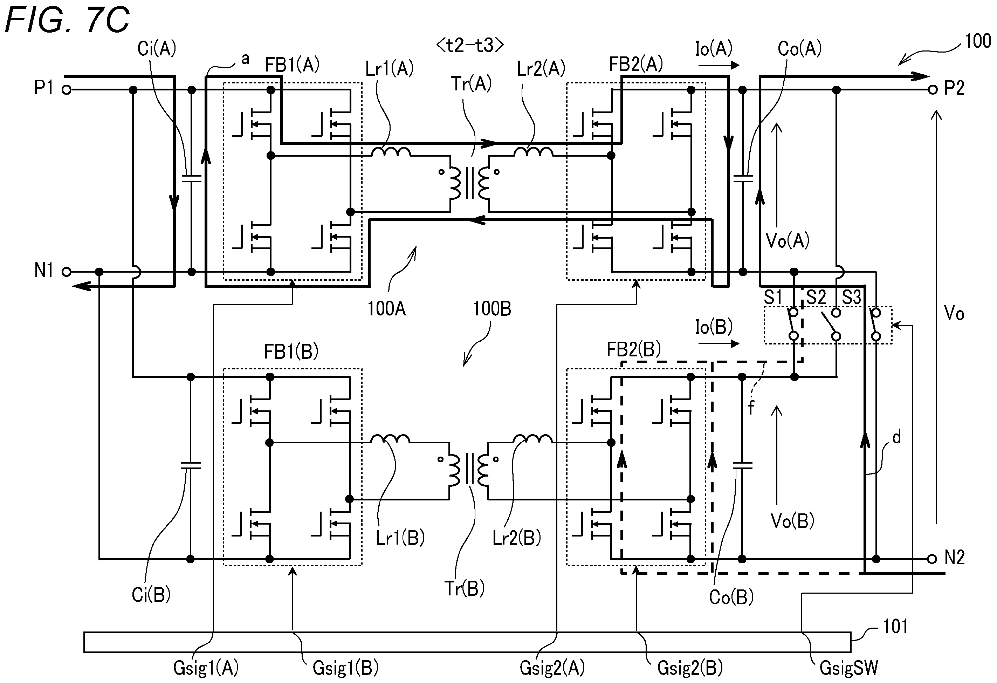

### · Current path illustrated in Fig. 7C

Fig. 7C is a current path in a period from time t2 to time t3 in Fig. 6. In a period from time t2 to time t3, the output voltage Vo(B) of the second DC-DC converter 100B becomes substantially zero, and the switch S3 is turned on (thick solid arrow d in Fig. 7C). When the output voltage Vo(B) becomes equal to or lower than the forward voltage of the parasitic diode of the MOSFET, the parasitic diode of the MOSFET is turned on, and the current to the output terminal P2 flows in parallel to the parasitic diode and the switch S3 (thick broken line arrow f in Fig. 7C). The ratio between the two currents (the current flowing to the parasitic diode and the current flowing to the switch S3) is determined by the forward voltage of the parasitic diode of the MOSFET or the like.

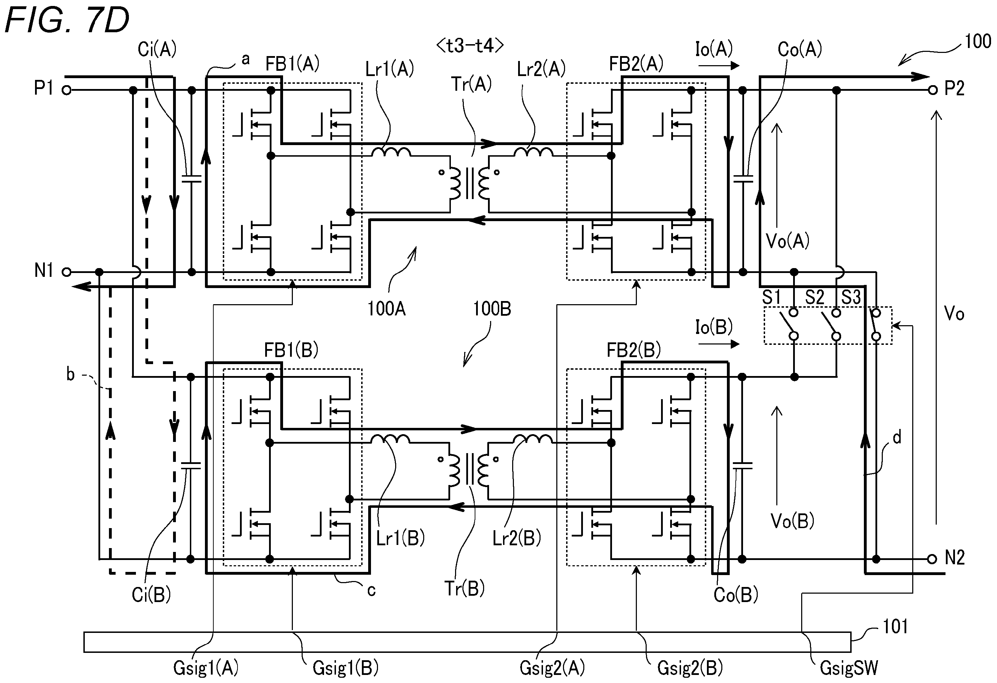

### · Current path illustrated in Fig. 7D

Fig. 7D is a current path in a period from time t3 to time t4 in Fig. 6. In a period from time t3 to time t4, the switch S1 is turned off, and all the current to the output terminal P2 flows through the switch S3 (thick solid arrow d in Fig. 7D). From time t3, the second DC-DC converter 100B starts switching and starts charging the output direct current capacitor Co(B) (thick solid arrow c in Fig. 7D). At this time, since both the switches S1 and S2 are off, the current flowing through the second DC-DC converter 100B is only the charging current (thick solid line arrow c in Fig. 7D) for the output direct current capacitor Co(B), and is not supplied to the output terminal P2.

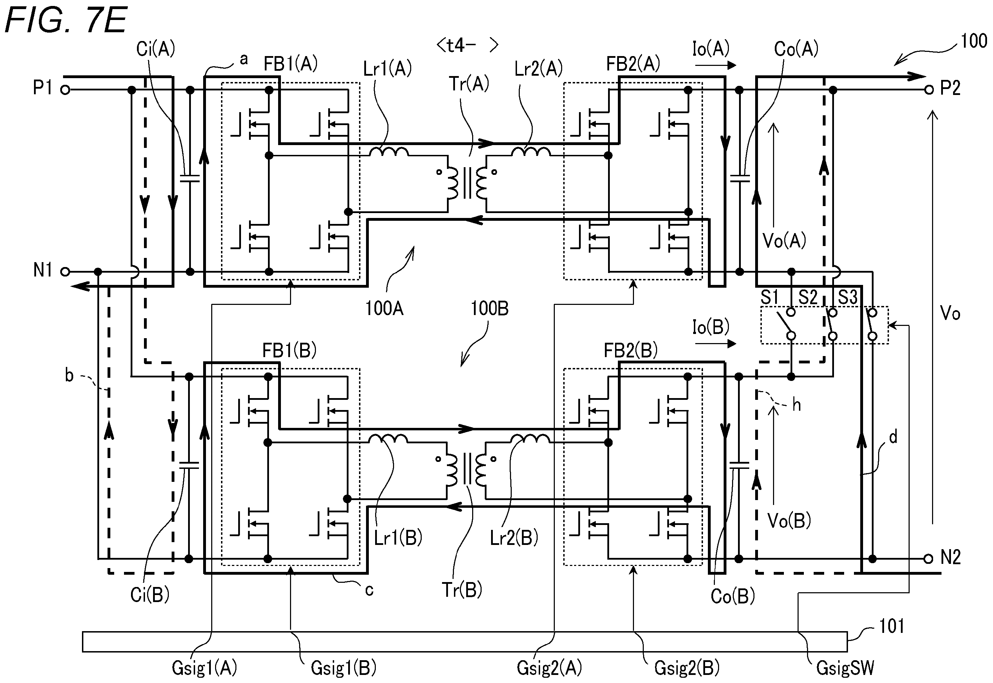

### · Current path illustrated in Fig. 7E

Fig. 7E is a current path at and after time t4 in Fig. 6. At and after time t4, when the output voltages Vo(A) and Vo(B) become substantially equal, the switch S2 is turned on, the outputs of the first DC-DC converter 100A and the second DC-DC converter 100B are connected in parallel, and the state shifts to the steady state. The total current from the first DC-DC converter 100A and the second DC-DC converter 100B (thick solid arrow d in Fig. 7E) flows through the output terminal P2.

### <Flowchart>

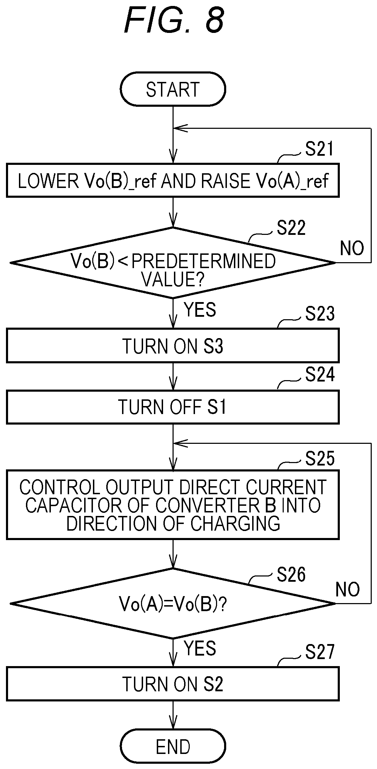

Fig. 8 is a flowchart illustrating <series to parallel connection> switching control of the power conversion device 100 according to the second embodiment. This flow is repeatedly executed by the control circuit 101 (Fig. 1) at a predetermined timing.

In Fig. 8, as an initial state, the outputs of the first DC-DC converter 100A and the second DC-DC converter 100B are connected in series. That is, the switch S1 is in an on state, and the switches S2 and S3 are in an off state.

When the control circuit 101 (Fig. 1) starts switching control, and a calculation flow starts, control is performed such that the output voltage command value Vo(B)ref of the second DC-DC converter 100B is lowered and the output voltage command value Vo(A)ref of the first DC-DC converter 100A is raised so that the total output voltage Vo does not change in step S21.

In step S22, the control circuit 101 determines whether the output voltage Vo(B) of the second DC-DC converter 100B is less than a predetermined value.

When the output voltage Vo(B) of the second DC-DC converter 100B is equal to or larger than the predetermined value (S22: No), the processing returns to step S21, and the operation of lowering the output voltage command value Vo(B)ref of the second DC-DC converter 100B and raising the output voltage command value Vo(A)ref of the first DC-DC converter 100A is continued.

When the output voltage Vo(B) of the second DC-DC converter 100B is less than the predetermined value (S22: Yes), the control circuit 101 turns on the switch S3 in step S23.

Next, in step S24, the control circuit 101 turns off the switch S1.

In step S25, the control circuit 101 performs control into the direction of charging the output direct current capacitor Co(B) of the second DC-DC converter 100B.

In step S26, the control circuit 101 determines whether the output voltage Vo(A) of the first DC-DC converter 100A and the output voltage Vo(B) of the second DC-DC converter 100B are equal to each other.

When the output voltage Vo(A) of the first DC-DC converter 100A and the output voltage Vo(B) of the second DC-DC converter 100B are not equal to each other (S26: No), the processing returns to step S25, and the control of step S25 is continued.

When the output voltage Vo(A) of the first DC-DC converter 100A and the output voltage Vo(B) of the second DC-DC converter 100B are equal to each other (S26: Yes), the control circuit 101 turns on the switch S2 in step S27.

The switching of the outputs to the parallel connection is completed by the above flow, and the switching control is ended by shifting to the steady state.

By performing the switching control illustrated in the above flowchart, the outputs of the first DC-DC converter 100A and the second DC-DC converter 100B can be switched from series to parallel without generating an inrush current or the like in the load connected to the output terminals P2 and N2.

### (Third embodiment)

A third embodiment of the present invention is a modification of the first and second embodiments. Hereinafter, differences from the first and second embodiments will be described, and description of the same points as those of the first and second embodiments will be omitted.

Fig. 9 is a diagram illustrating a circuit configuration of a power conversion device 200 according to the third embodiment of the present invention. The same components as those in Fig. 1 are denoted by the same reference numerals, and description of overlapping points are omitted.

In the first and second embodiments, the first DC-DC converter A and the second DC-DC converter B are of the DAB system, but in the power conversion device 200 illustrated in Fig. 9, capacitors Cr1 and Cr2 are inserted in series on the input side and the output side of the high-frequency transformer Tr, respectively.

A first DC-DC converter 200A and a second DC-DC converter 200B (a plurality of isolated DC-DC converters) adjust power by shifting switching phases of MOSFETs included in the input-side full-bridge circuit FB1 and the output-side full-bridge circuit FB2 between the input-side full-bridge circuit FB1 and the output-side full-bridge circuit FB2.

The circuit configuration of Fig. 9 is called a resonance system or a resonance type, and has a characteristic that the winding current of the high-frequency transformer Tr is sinusoidal because the excitation inductance and leakage inductances Lr1 and Lr2 (not illustrated) of the high-frequency transformer Tr and the capacitors Cr1 and Cr2 cause series current resonance.

In the resonance system, similarly to the DAB, zero voltage switching (ZVS: switching performed in a state where the voltage is zero) operation is performed at the time of turning on the MOSFET of each full-bridge circuit. Further, as a characteristic of the resonance system, the MOSFET is turned off at the time when the sinusoidal current falls from the peak, whereby the cutoff current can be reduced, and the switching loss can be suppressed.

The present embodiment can also be applied to a resonance system, and effects similar to those of the first and second embodiments, that is, connection switching of an input or an output can be realized in a state where a load such as a battery connected to an input or an output of a power converter is not affected and the power converter is operated.

### [Effects]

The power conversion device 100 (Fig. 1) according to the first embodiment includes the first DC-DC converter 100A and the second DC-DC converter 100B having inputs connected in parallel and outputs each including the direct current capacitor Co, the switches S1 to S3 that switch outputs between a parallel connection and a series connection or whether to disconnect the outputs on an output side of the first DC-DC converter 100A and the second DC-DC converter 100B, and the control circuit 101 that controls first DC-DC converter 100A and the second DC-DC converter 100B and the switches S1 to S3, wherein when switching the outputs of the first DC-DC converter 100A and the second DC-DC converter 100B (a plurality of isolated DC-DC converters) from a parallel connection to a series connection, the control circuit 101 (Fig. 1) causes at least one isolated DC-DC converter of the first DC-DC converter 100A and the second DC-DC converter 100B to continue the operation, causes the other insulated DC-DC converter to stop, cuts off the output of the isolated DC-DC converter that has been stopped using the switches S1 to S3, thereafter causes the isolated DC-DC converter that has been stopped to regenerate the stored energy of the output direct current capacitor Co to the input side (the isolated DC-DC converter continuing operation), and when the voltage between the terminals of the output direct current capacitor Co of the isolated DC-DC converter that has been stopped becomes equal to or less than a predetermined value, causes the output of the isolated DC-DC converter that has been stopped to be connected in series using the switches S1 to S3, and restarts the operation of the isolated DC-DC converter that has been stopped (Fig. 3, 4A to 4H, 5, and 6).

In the conventional technique, when switching from parallel to series is performed, it is necessary to stop each DC-DC converter and discharge each capacitor with a resistor to prevent an inrush current due to a voltage difference with a direct current unit, and a stop time is generated in the system. Thus, discharging the capacitor without stopping the system has been a problem.

The power conversion device 100 according to the first embodiment stops, for example, only the second DC-DC converter 100B of the two (first DC-DC converter 100A and second DC-DC converter 100B), and regenerates the stored energy of the output direct current capacitor Co to the first DC-DC converter 100A on operation to discharge.

After discharging, the control circuit 101 performs switching control on the switches S1 to S3 to perform series control, and then performs voltage control to lower the output voltage of the first DC-DC converter 100A and raise the output voltage of the second DC-DC converter 100B so that the total output voltage of the two converters does not change from that before the switching. That is, when the series to parallel switching of the two isolated DC-DC converters 100A and 100B is performed by the three switches S1 to S3, the control circuit 101 stops the circuit so that an inrush current does not occur because of a voltage difference with the capacitor (battery) of the direct current unit, discharges the output direct current capacitor Co, and then performs the switching as a switching method for the switches S1 to S3 in consideration of the transient operation.

In this manner, when switching the outputs of the first DC-DC converter 100A and the second DC-DC converter 100B from a parallel connection to a series connection, the power conversion device 100 (Fig. 1) regenerates the energy of the DC-DC converter that has been stopped to another DC-DC converter and switches to the series connection. That is, the DC-DC converter that has been stopped is started in a direction in which power is sent to the primary side, and the output direct current capacitor Co is discharged. The energy of the output direct current capacitor Co can be regenerated, and a discharge resistor is unnecessary.

As a result, the power conversion device 100 (Fig. 1) can switch from parallel to series while continuing the operation of the system. In the first embodiment (Figs. 3, 4A to 4H, 5, and 6), the outputs of the first DC-DC converter 100A and the second DC-DC converter 100B can be switched from parallel to series without generating an inrush current or the like in the load connected to the output terminals P2 and N2. As a result, connection switching of the input or output can be realized in a state where a load such as a battery connected to the input or output of a power converter is not affected and the power converter is operated.

When switching the outputs of the first DC-DC converter 100A and the second DC-DC converter 100B from a series connection to a parallel connection, the control circuit 101 (Fig. 1) of the power conversion device 100 (Fig. 1) according to the second embodiment continues the operation of at least one isolated DC-DC converter of the first DC-DC converter 100A and the second DC-DC converter 100B, and when the output voltage of the other isolated DC-DC converter becomes equal to or less than a predetermined value, the control circuit switches the outputs of the isolated DC-DC converter continuing the operation and the isolated DC-DC converter that has been stopped using the switches S1 to S3 so as to establish a series connection.

With this configuration, in the second embodiment (Figs. 6, 7A to 7E, and 8), the outputs of the first DC-DC converter 100A and the second DC-DC converter 100B can be switched from series to parallel without generating an inrush current or the like in the load connected to the output terminals P2 and N2**.** As a result, connection switching of the input or output can be realized in a state where a load such as a battery connected to the input or output of a power converter is not affected and the power converter is operated.

In the power conversion device 100 (Fig. 1) according to the first embodiment, when the voltage between the terminals of the direct current capacitor of the isolated DC-DC converter that has been stopped does not decrease to a value equal to or less than a predetermined value, the control circuit 101 consumes the stored energy of the direct current capacitor as a switching loss of the power device included in the isolated DC-DC converter.

With this configuration, when the output voltage does not decrease, it can be consumed by the switching loss.

In the power conversion device 100 (Fig. 1) according to the first embodiment, when restarting the operation of the isolated DC-DC converter that has been stopped, the control circuit 101 calculates output voltage command values of the isolated DC-DC converter continuing operation and the isolated DC-DC converter that has been stopped such that the total output voltage obtained by adding up the output voltages of the isolated DC-DC converter continuing operation and the isolated DC-DC converter that has been stopped becomes constant.

With this configuration, since the total voltage does not change when the operation is restarted, the fluctuation of the output voltage can be prevented in advance, and the stability of the system operation can be secured when the outputs of the DC-DC converters are switched from a series connection to a parallel connection.

The present invention is not limited to the above-described embodiments but includes other modifications and applications without departing from the gist of the present invention described in the claims. For example, the above-described examples have been described in detail for easy understanding of the present invention, and the present invention is not necessarily limited to those having all the described configurations. A part of the configuration of one example can be replaced with the configuration of another example, and the configuration of one example can be added to the configuration of another example. A part of a configuration of each example can be added to, deleted from, and replaced with a part of another configuration.

For example, the arrangement, wiring, and the like of the semiconductor elements constituting a full-bridge circuit are not limited to the illustrated form. The semiconductor element may be any of a unipolar device such as a junction field effect transistor (JFET)-type and a bipolar device such as an IGBT in addition to a MOSFET. Depending on the device, the names of the main terminal and the sense terminal are referred to as "collector" and "emitter" instead of "drain" and "source" described above.

## Claims

1. A power conversion device comprising:
a plurality of isolated DC-DC converters having inputs connected in parallel and outputs each including a direct current capacitor;
a changeover switch that switches outputs of the plurality of isolated DC-DC converters between a parallel connection and a series connection or whether to disconnect the outputs;
and a control unit that controls the isolated DC-DC converters and the changeover switch,
wherein when the control unit switches the outputs of the plurality of isolated DC-DC converters from a parallel connection to a series connection,
the control unit causes at least one isolated DC-DC converter of the plurality of isolated DC-DC converters to continue operation and another isolated DC-DC converter of the plurality of isolated DC-DC converters to stop, cuts off the output of the isolated DC-DC converter that has been stopped using the changeover switch, thereafter regenerates a stored energy of the direct current capacitor of the isolated DC-DC converter that has been stopped to the isolated DC-DC converter continuing operation, and, when a voltage between terminals of the direct current capacitor of the isolated DC-DC converter that has been stopped has a value equal to or less than a predetermined value, causes the output of the isolated DC-DC converter that has been stopped to be connected in series using the changeover switch, and restarts operation of the isolated DC-DC converter that has been stopped.

2. A power conversion device comprising:
a plurality of isolated DC-DC converters having inputs connected in parallel and outputs each including a direct current capacitor;
a changeover switch that switches outputs of the plurality of isolated DC-DC converters between a parallel connection and a series connection or whether to disconnect the outputs;
and a control unit that controls the isolated DC-DC converters and the changeover switch,
wherein when the control unit switches the outputs of the plurality of isolated DC-DC converters from a series connection to a parallel connection,
the control unit causes at least one isolated DC-DC converter of the plurality of isolated DC-DC converters to continue operation, and, when an output voltage of another isolated DC-DC converter of the plurality of isolated DC-DC converters has a value equal to or less than a predetermined value, the control unit switches the outputs of the isolated DC-DC converter continuing operation and the isolated DC-DC converter that has been stopped to establish a series connection using the changeover switch.

3. The power conversion device according to claim 1, wherein when the voltage between the terminals of the direct current capacitor of the isolated DC-DC converter that has been stopped does not lower to a value equal to or less than the predetermined value, the control unit consumes the stored energy of the direct current capacitor as a switching loss of a power device included in the isolated DC-DC converter.

4. The power conversion device according to claim 1, wherein when restarting the operation of the isolated DC-DC converter that has been stopped, the control unit calculates output voltage command values of the isolated DC-DC converter continuing operation and the isolated DC-DC converter that has been stopped to make a total output voltage obtained by adding up an output voltage of the isolated DC-DC converter continuing operation and an output voltage of the isolated DC-DC converter that has been stopped be constant.

5. The power conversion device according to claim 1 or 2, wherein each of the plurality of isolated DC-DC converters is a DAB (Dual Active Bridge).

6. The power conversion device according to claim 1 or 2, wherein each of the isolated DC-DC converters is a resonant converter.
